# EUROPEAN PATENT APPLICATION

(11) **EP 0 953 894 A1**
(43) Date of publication of application: **03.11.1999**
(21) Application number: 99303332.3
(22) Date of filing: 28.04.1999
(51) Int. Cl.: G06F 3/12

(54) **Control interface for printing or imaging devices**

(30) Priority: 30.04.1998 GB 9809282
(71) Applicant: Image Technologies Developments plc, Brentford, Middlesex TW8 0AH (GB)
(72) Inventor: Shaikh, Ahmed Urooj, Hillingdon, Middlesex UB10 9LP (GB)
(74) Representative: Brunner, Michael John

(57) **Abstract**

A printer or video controller interface has an input K for direct connection to a computer PC to receive compressed print or video data from the computer, and an output port L for connection to a printing device or video display P. A disk drive controller G is connected to the output L and disk drives B,C are directly connectable either to the input port K for receiving compressed print or video data via the input port or to the controller G for providing data to the output port and hence the printing device or video display. A microcontroller F selectively controls connection of the disk drives B,C to the input port or to the controller G, and reading of the data from the disk drives, decompressing of the data, and providing of the decompressed data to the output port L for printing or display.

## Description

The present invention relates to a control interface for printing devices such as colour laser photocopiers, and may be used for printing to a range of printing devices other than colour photocopiers including imaging or video display devices.

With increasing use of computer-generated images there is a corresponding increasing demand for printing of these. The term "printing" in this context can also be applied to printing to a screen or video display device. However, such images comprise very large numbers of data bits and there is a need therefore to use printing devices which can handle such large amounts of data effectively. Colour photocopiers, image or video recording/playing and similar printing devices, in particular, are capable of meeting this requirement, but require data to be provided at very high bit rates. This has been achieved in the past by the use of dedicated print stations or print servers (in a network environment) having high speed digital bus interfaces connected to the printing device. However, the use of such print station or print server computers is an expensive solution to the problem since such computers are, at least, high-end PCs incorporating a high speed data bus such as, for example, an S bus or PCI bus and require memory based data storage to provide an image store (or buffer) capable of storing the image and enabling it to be transferred to the printing device at the high data rate required.

EP-A-0 606 139 discloses a printing machine which incorporates two or more hard disks in parallel to overcome bandwidth limitations (in effect a form of RAID system). The specification describes how any centralised resource on a hard disk (such as an image) can be distributed over two or more hard disks. When a peripheral device accesses this resource a 'resource' manager breaks the request into multiple requests over all the hard disks in parallel, to maximise throughput.

The present invention is aimed at providing a printing device controller interface capable of enabling a computer generated, a video or image captured image to be printed or played back to a screen respectively without the need for an expensive dedicated print station or server.

According to the present invention there is provided a printer or video controller interface comprising
an input for direct connection to a computer to receive compressed print or video data therefrom;
an output port for connection to a printing device or video display;
a disk drive controller connected to the output;
at least one disk drive directly connectable either to the input port for receiving compressed print or video data via the input port or to the controller for providing data to the output port and hence the printing device or video display;
   and
control means for selectively controlling connection of the disk drive to the input port or to the controller, and for reading the data from the disk drive, decompressing the data, and providing the decompressed data to the output port for printing to a printing device or video display.

With such an interface, a conventional workstation PC can be used to generate images for printing or display, compress them using a proprietary algorithm, and send them to the interface for temporary storage (buffering) on the disk drive of the interface, the interface input being, for example a SCSI, Firewire (IEEE1394) or Fibre Channel connector connected to a standard SCSI, Firewire (IEEE1394) or Fibre Channel disk drive. This enables the disk drive to appear to the workstation as a, for example, SCSI device to which the processed image data files, appropriately compressed on the workstation, are "printed" just as though the control interface were a printing device itself. As soon as the image data has been stored on the interface disk drive the control means, preferably including a microcontroller capable of issuing commands through the disk drive controller, retrieves the compressed data and decompresses it "on the fly" and sends it to the output port for onward transmission to the printing device or video display. The control means preferably switches the disk drive between connection to the input port and the disk drive controller and initiates printing by sending commands to the output port and controls synchronisation of data transmission to the printer, preferably by means of a printer control logic and decompression interface directly connected to the output port.

By this means the required data transfer rate to the printing device or video display can be achieved without the need for very large amounts of expensive memory in a dedicated print station or print server.

It is necessary to provide a control means separate from the disk drive controller because conventional disk drives are incapable of providing the required sustained data transfer rate to the printing device. For example, colour photocopiers may require a data transmission rate of a minimum of 9Mbs per second, which is incapable of being achieved by conventional disk drive controllers, video at up to 30 frames per second presents a similar problem. However, by compressing the data prior to storage on the disk drive and then decompressing it 'on the fly' in the control means when sending data to the printing device, a disk drive having a data transmission rate of 5Mbs per second is provided with the capability, in conjunction with the control means, of supplying the data to the printing device at the required transmission rate. Compressing the data prior to storage on the disk drive also allows many more pages or video frames of printing data to be stored of course.

The control logic and decompression interface enables the flow of data from the disk drive to be regulated according to the requirements of the printing or video display device and enables appropriate printer/video control signals to be provided to the printer/video display to initiate printing, recording or viewing.

Preferably, the controller interface comprises a pair of disk drives to allow double buffering and enhanced data transmission by allowing the computer to be sending data to one disk drive while the other is outputting data to the printing device. Obviously, if desired, more than two disk drives could be provided.

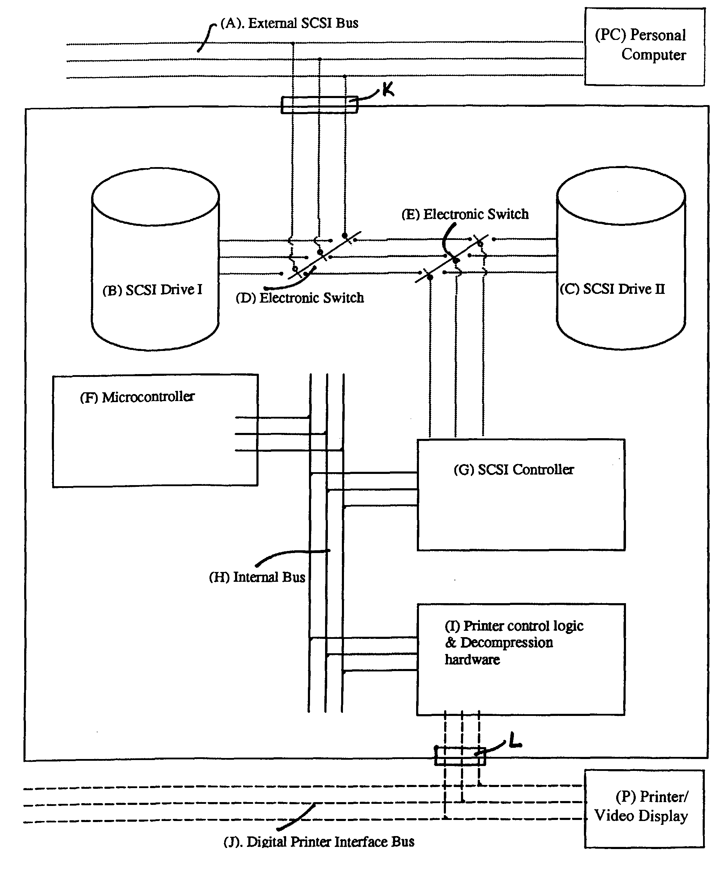

One example of a printer controller interface according to the present invention will now be described with reference to the accompanying drawing which is a drawing of the layout of the components of the controller interface.

The controller interface of the example is connected via an external SCSI bus A to a personal computer PC through an input port K in the form of a conventional SCSI connector. Within the controller interface a pair of SCSI disk drives B,C are provided, connectable via electronic switches D,E to the input port K and/or to a conventional SCSI controller G. The arrangement is such that either drive may be connected to the input port K or to the SCSI controller G independently of the other.

An internal bus H provides an interconnect mechanism for the interface controller components to communicate with each other.

The interface controller has control means which includes printer control logic & decompression hardware I which is responsible for decompression and for low level synchronization of data to a printing device P, but which, for example, may be a conventional printer or a video display device, to which it is connected by a digital printer interface bus J though an output port L. The digital printer interface bus J implements a fast DMA (direct memory access) path to the SCSI controller G which is required to access data at maximum speed.

The control means also includes a microcontroller F which controls the operation of the entire interface controller via the internal bus H. It controls the electronic switches E and D; it initiates prints by sending commands to the printer control logic hardware I; and then controls synchronisation of the transmission of data to the printer. It also receives commands from the personal computer via the on-board SCSI controller G, and it may also run user interface controls on the product such as LCD panels and press buttons (not shown).

The SCSI Controller G provides interface logic for accessing the SCSI bus A and its purpose is two-fold. Firstly, it allows the microcontroller F and the printer control logic hardware I to access the data on drives C or B and, secondly, it allows control commands from the computer, such as "initiate print", to be received by the controller interface by providing a connection to the SCSI bus A.

In use, as explained above, the electronic switches D and E allow either of disk drives B and C to be connected to the computer via the external bus A or to the internal SCSI controller G. This gives 4 possible configurations:
1. Disk drive B and controller G connected to computer, disk drive C isolated.
2. Disk drive C connected to computer, disk drive B connected to controller G.
3. Disk drive C and controller G connected to computer, disk drive B isolated.
4. Disk drive B connected to computer, disk drive C connected to controller G.

Configuration 1 is used when the system is not sending data to the printing device through the output port L. The computer can send print data to disk drive B for storage and can subsequently send commands to the controller G via the SCSI bus A, and hence to the microcontroller F to initiate a print cycle.

Configuration 2 is used when the system starts printing from drive B. Disk drive B and the SCSI controller G are connected to one another, but isolated from the rest of the SCSI bus and hence the system can proceed with a print cycle, reading data at full capacity from disk drive B without fear of interruption from the external SCSI bus A. Also the computer and disk drive C are connected via the SCSI bus A and hence the computer can send the next page for printing to the disk drive C.

Configuration 3 is the reverse of 1 and allows the computer to send data to disk drive C and then initiate a print cycle by sending commands via the SCSI bus A.

Configuration 4 is the reverse of 2 and allows the system to print data from disk drive C while the computer can send data for next print operation to disk drive B.

This effectively allows printing to proceed via a pipeline, where the computer can send print data to one disk drive while the controller interface prints a previously sent page from the other disk drive. The system proceeds through the four states 1,2,3 and 4 and then 1 again.

In an alternative system, the disk drive C is removed. This gives a lower performance but cheaper system, in which the computer has to wait for one print cycle to finish before sending data for the next one.

## Claims

1. A printer or video controller interface comprising
an input for direct connection to a computer to receive compressed print or video data therefrom;
an output port for connection to a printing device or video display;
a disk drive controller connected to the output;
at least one disk drive directly connectable either to the input port for receiving compressed print or video data via the input port or to the controller for providing data to the output port and hence the printing device or video display;
and
control means for selectively controlling connection of the disk drive to the input port or to the controller, and for reading the data from the disk drive, decompressing the data, and providing the decompressed data to the output port for printing or display.

2. A printer or video controller interface according to claim 1, further comprising a pair of disk drives, to allow double buffering and enhanced data transmission by enabling the computer to be sending data to one disk drive while the other is outputting data to the printing device.

3. A printer or video controller interface according to claim 1, further comprising a number of disk drives greater than two.

4. A printer or video controller interface according to any of claims 1 to 3, wherein the disk drives are SCSI drives and the disk drive controller is a SCSI controller.

5. A printer or video controller interface according to any of claims 1 to 3, wherein the disk drive controller is a Firewire (IEEE1394) controller.

6. A printer or video controller interface according to any of claims 1 to 3, wherein the disk drive controller is a Fibre Channel controller.

7. A printer or video controller interface according to any of claims 1 to 6, wherein the control means is arranged to switch the disk drive between connection to the input port and the disk drive controller.

8. A printer or video controller interface according to any of claims 1 to 7, wherein the control means is arranged to initiate printing by sending commands to the output port and controls synchronisation of data transmission to the printer.

9. A printer or video controller interface according to any of claims 1 to 8, wherein the control means is arranged to control synchronisation of data transmission to the printer by means of a printer control logic and decompression interface directly connected to the output port.

10. A printer or video controller interface according to any of claims 1 to 8, wherein the control means includes a microcontroller capable of issuing commands through the disk drive controller

11. A printing system comprising
a printer or video controller interface according to any of claims 1 to 10;
a computer connected to said input of said printer controller to enable to enable the printing system to receive compressed print data therefrom; and
a printing device connected to said output port of said printer controller.

12. A printing system according to claim 10, wherein said printer comprises a colour laser photocopier.

13. A printing method in which compressed print data is output from a computer, via a printer or video controller interface according to claim 1, to a printing device connected to said output port, and in which:
(A) the input port is directly connected to the at least one disk drive whereby said data is written to said disk or disks;
(B) the printer controller interface output port is directly connected to the disk drive controller; and
(C) said data is read from the disk or disks, decompressed, and provided to the output port and hence to said printing device for printing.
